# EUROPEAN PATENT APPLICATION

(11) **EP 1 679 670 A1**
(43) Date of publication of application: **12.07.2006**
(21) Application number: 05000166.8
(22) Date of filing: 05.01.2005
(51) Int. Cl.: G08B 15/00, F41H 9/10

(54) **Safety handset with defense spray device**

(71) Applicant: Chen, Cheng-Ming, Shetou Shang, Changhua County (TW)
(72) Inventor: Chen, Cheng-Ming, Shetou Shang, Changhua County (TW)
(74) Representative: Viering, Jentschura & Partner

(57) **Abstract**

A safety handset comprises a handset body (1) for containing elements of a handset; a pressurized container (2) installed within the handset body; the pressurized container having a spray head (21); a switch (3) for opening or closing the spray head of the pressurized container; wherein when the switch is at a second position (B), the spray head of the pressurized container will be opened; when the switch is in a first position (A), the spray head of the pressurized container will be closed and is retained at this position. The safety handset can further comprise at least one emergency automatic dial system; or an emergency automatic dial system and a satellite positioning system; or at least one camera device (4) and an image transfer system. The switch is connected in parallel to these devices. When the switch is placed in the second position, these devices can be actuated.

## Description

### FIELD OF THE INVENTION

The present invention relates to safety handsets, and in particular to a safety handset, wherein the handset of the present invention has the function of burglar-proof and violation-proof. Furthermore, by pressing the switch, an alert or imaging function can be actuated so as to protect the user (specifically a girl going outside at night). The present invention has resolved the problem of the conventional atomizers.

### BACKGROUND OF THE INVENTION

Currently, public security becomes worse day by day. Women often need carry security device by hands, specifically as they walk at night. Atomizers are ones frequently used. However it is not convenient. Since indeed it is very seldom to use the atomizer, it is often that the atomizers are placed in the bottoms of the bags, but this is inconvenient as it is really used so that the burglar has time and chance to commit a crime.

Thereby it is apparent that the prior art design is not suitable and a novel one is necessary as in an emergency condition. However currently people need to carry the handset almost everyday and outdoors. Thus if the security device can be combined with the handset, the prior art problem of inconvenience can be resolved.

### SUMMARY OF THE INVENTION

Accordingly, the primary object of the present invention provides a safety handset, wherein the handset of the present invention has the function of burglar-proof and violation-proof. Furthermore, by pressing the switch, an alert or imaging function can be actuated so as to protect the user (specifically a girl going outside at night). The present invention has resolved the problem of the conventional atomizers.

To improve above object, the present invention provides a safety handset which comprises a handset body for containing elements of a handset; a pressurized container installed within the handset body; the pressurized container having a spray head; a switch for opening or closing the spray head of the pressurized container; wherein when the switch is at a second position, the spray head of the pressurized container will be opened; when the switch is in a first position, the spray head of the pressurized container will be closed and is retained at this position. The safety handset can further comprise at least one emergency automatic dial system; or an emergency automatic dial system and a satellite positioning system; or at least one camera device and an image transfer system. The switch is connected in parallel to these devices. When the switch is placed in the second position, these devices can be actuated.

The various objects and advantages of the present invention will be more readily understood from the following detailed description when read in conjunction with the appended drawing.

### Brief Description of the Drawings

Fig. 1 shows a front schematic view of the first preferred embodiment of the present invention.
Fig. 2 is a schematic view about the operation of Fig. 1.
Fig. 3 is a front schematic view about the second preferred embodiment of the present invention.
Fig. 4 is a schematic view about the operation of Fig. 3.

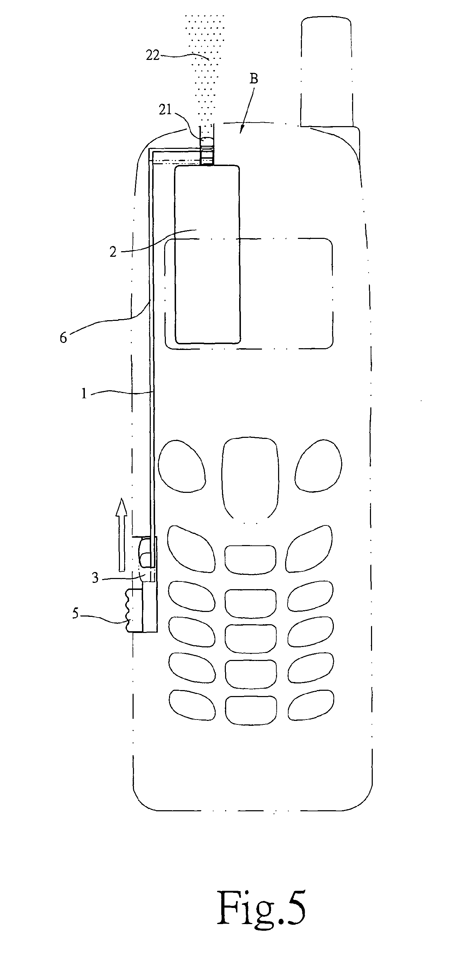

Fig. 5 shows another arrangement of the second preferred embodiment of the present invention.

### DETAILED DESCRIPTION OF THE INVENTION

In order that those skilled in the art can further understand the present invention, a description will be described in the following in details. However, these descriptions and the appended drawings are only used to cause those skilled in the art to understand the objects, features, and characteristics of the present invention, but not to be used to confine the scope and spirit of the present invention defined in the appended claims.

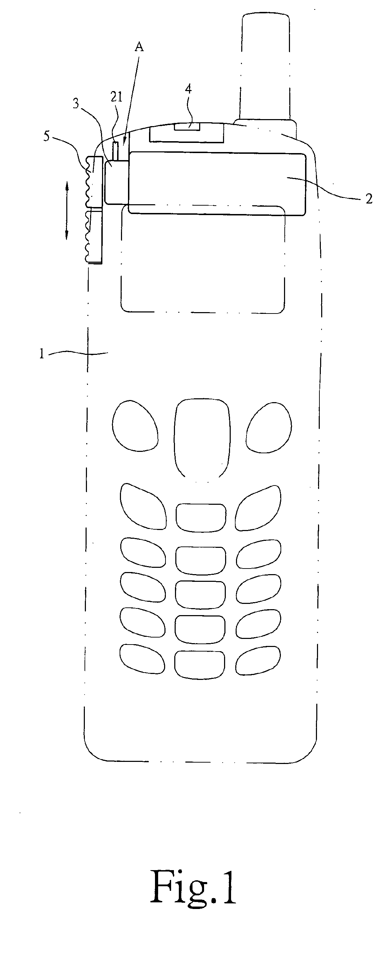

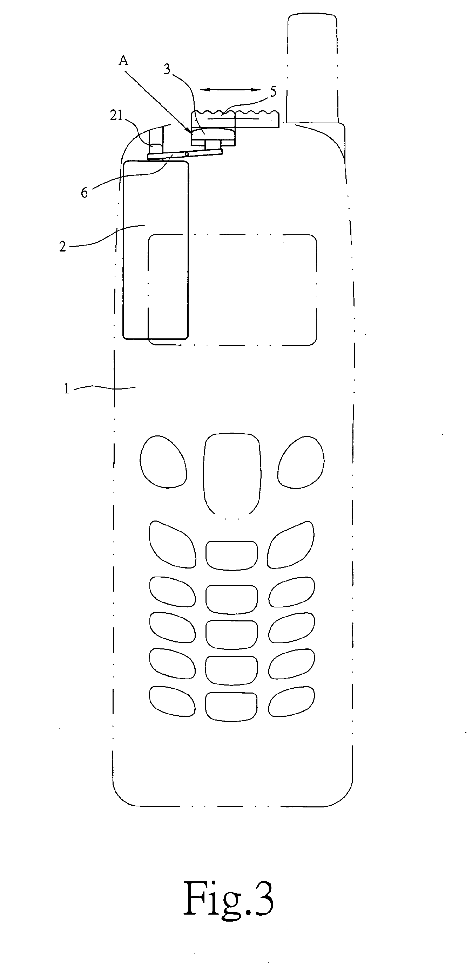

Referring to Figs. 1 and 3, the present invention has the following elements.

A handset body 1 serves for containing elements of a handset.

A pressurized container 2 is installed within the handset body 1. The pressurized container 2 has a spray head 21. The pressurized container 2 is contained with gas, chili, or the combination thereof 22.

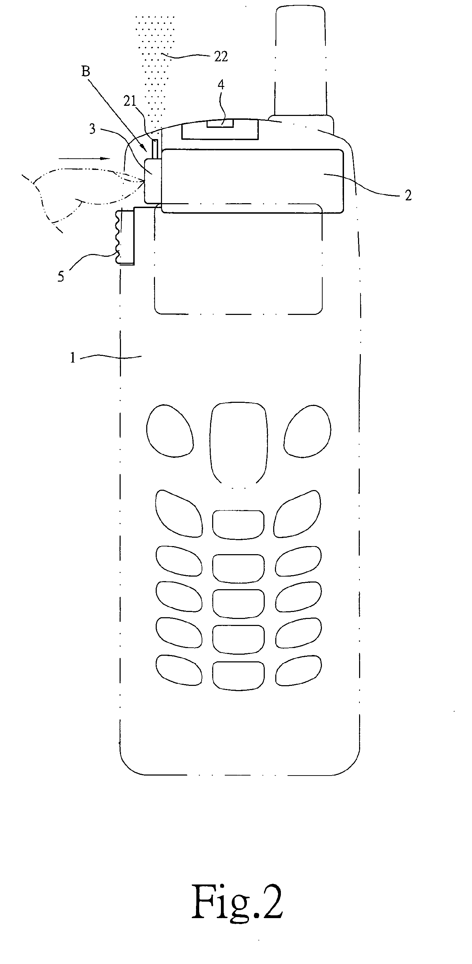

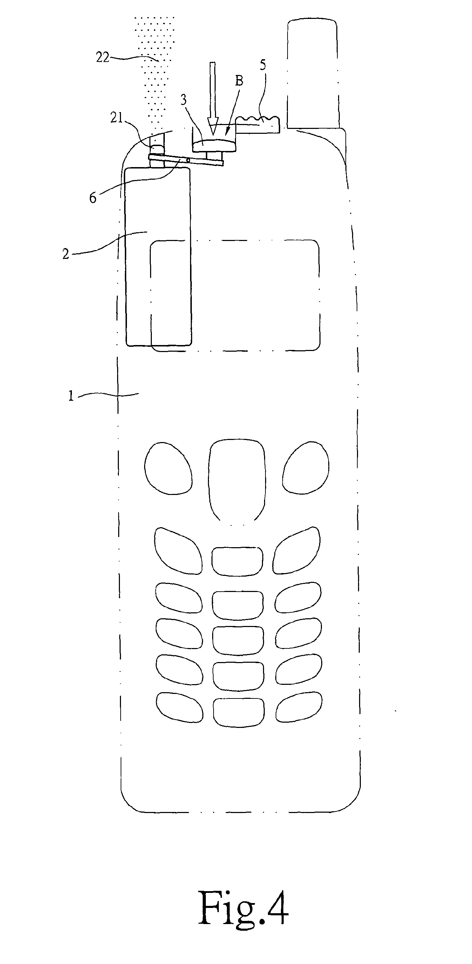

A switch 3 serves for opening or closing the spray head 21 of the pressurized container 2. When the switch 3 is at a second position B, the spray head 21 of the pressurized container 2 will be opened, as illustrated in Figs. 2 and 4. When the switch 3 is in a first position A, the spray head 21 of the pressurized container 2 will be closed and is retained at this position, as shown in Figs. 1 and 3.

The switch 3 further comprises a driving rod 6 which is connected to the spray head 21, as shown in Figs. 3 and 4. The driving rod 6 and the switch 3 serve as a far end control of the spray head 21.

Further, the handset of the present invention further comprises an emergency dial system and the switch 3 and the emergency dial system are connected in parallel. When the switch 3 is placed in the second position B, the emergency dial system will be actuated.

The automatic emergency dial system is realized by presetting a set of numbers in an automatic dial system of the handset. In emergency, the switch 3 can be pressed to open the pressurized container 2, and a rescue number is dialed automatically. The rescue number is preset in a phone system. However this is known in the prior art and thus the details will not be further described here.

Moreover the handset of the present invention further comprises at least one emergency automatic dial system and a satellite positioning system. The switch 3 is connected in parallel to the emergency automatic dial system. When the switch 3 is placed in position B, the emergency automatic dial system and the satellite positioning system will be actuated so as to dial at least one set of rescue number. The satellite positioning system serves to lock the position of signaling. Since the emergency automatic dial system and the satellite positioning system are known in the prior art, the details will not be further described herein.

Besides the handset of the present invention comprises at least one camera device 4 and an image transfer system. The switch 3 is connected in parallel to the camera device 4 and the image transfer system. When the switch 3 is placed in the second position B, the camera device 4 will be actuated to capture images and the image transfer system will be actuated to transfer images. Thereby the image of a desire object (For example, an evil person) can be recorded and then transferred to a preset position as a proof. Since the camera device 4 and the image transfer system are known in the prior art, the details will not be further described herein.

With reference to Figs. 1 to 4, the handset body 1 of the present invention further comprises a cover 5 which is placed at an outside of the switch 3. The cover 5 serves to protect the switch 3 and as a further protection to the pressurized container 2 so as to prevent the pressurized container 2 from being opened due to a careless pressing operation.

Thereby from above described, it is known that the handset of the present invention has the functions of burglar-proof and violation-proof. Furthermore, by pressing the switch, an alert or imaging function can be actuated so as to protect the user (specifically a girl going outside at night). The present invention has resolved the problem of the conventional atomizers.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A safety handset comprising:
a handset body for containing elements of a handset;
a pressurized container installed within the handset body; the pressurized container having a spray head;
a switch for opening or closing the spray head of the pressurized container; wherein when the switch is at a second position, the spray head of the pressurized container will be opened; when the switch is in a first position, the spray head of the pressurized container will be closed and is retained at this position.

2. The safety handset as claimed in claim 1, further comprising at least one emergency automatic dial system; the switch is connected in parallel to the emergency automatic dial system, when the switch is at the second position, the emergency automatic dial system will be actuated.

3. The safety handset as claimed in claim 1, further comprising an emergency automatic dial system and a satellite positioning system; and the switch is connected in parallel to the emergency automatic dial system; when the switch is at the second position, the emergency automatic dial system and the satellite positioning system will be actuated.

4. The safety handset as claimed in claim 1, further comprising at least one camera device and an image transfer system; the switch being connected in parallel to the camera device and the image transfer system; where when the switch is placed in the second position, the camera device will be actuated to capture images and the image transfer system will be actuated to transfer images.

5. The safety handset as claimed in claim 1, further comprising a cover installed at an outer side of the switch.

6. The safety handset as claimed in claim 1, wherein the pressurized container is installed with one of gas, chili, and the combination of gas and chili.

7. The safety handset as claimed in claim 1, further comprising a driving rod which is connected to the switch and the spray head so as to be as a far end control of the spray head.
